Europäisches Patentamt

European Patent Office

Office européen des brevets

(11) Publication number: **0 090 938**
A1

## EUROPEAN PATENT APPLICATION

(21) Application number: 83101643.1

(22) Date of filing: 21.02.83

(51) Int. Cl.³: **G 05 D 16/20**

(30) Priority: 29.03.82 JP 43255/82
05.04.82 US 365793

(43) Date of publication of application:
12.10.83 Bulletin 83/41

(84) Designated Contracting States:
DE FR IT SE

(71) Applicant: Ranco Incorporated
550 Metro Place North Suite 550
Dublin Ohio 43017(US)

(72) Inventor: Hall, Dale G.
8215 Walnut Avenue
Galena Ohio 43021(US)

(74) Representative: Lehn, Werner, Dipl.-Ing. et al,
Hoffmann, Eitle & Partner Patentanwälte
Arabellastrasse 4 (Sternhaus)
D-8000 München 81(DE)

(54) Electric to pressure transducer and actuator system.

(57) A transducer (20) for producing an output pressure in
response to an electrical input signal comprises a housing
(30) defining an input port (32) communicating with a
pressure source (14), an input port (34) communicating with
ambient atmosphere and an output port (36), a pressure
regulator (40) including a regulator control member movable
to control communication between the output port (36) and
the input ports (32, 34) and an electric signal responsive
actuator (42) for exerting actuating force on the control
member to govern the output pressure as a function of input
signals from a signal source (16). The signal responsive
actuator comprises a magnetic field producing assembly
(102, 104, 106) supported by the housing adjacent the
regulator (40) and a conductor (101) electrically connected
across the signal source (16) and disposed in a path of flux
produced by the magnetic field producing assembly. The
conductor is supported in force transmitting relationship
with the control member and exerts force on the control
member which varies in relation to changes in signals from
the source.

Fig. I

-1-

## Electric to Pressure Transducer and Actuator System

The present invention relates to transducers and to actuator systems employing transducers, e.g. actuator systems having transducers constructed and arranged to produce a vacuum pressure output which varies in value in response to variations in value of an electrical input signal.

In this specification, the term "vacuum pressure" is used in a general sense to mean a pressure lower than ambient pressure.

With wide availability of inexpensive yet sophisticated electronic devices capable of monitoring large numbers of different input conditions, processing the information received and producing outputs for governing operation of various condition responsive devices, electronic controllers have become commonplace in many environments where they have not been widely used in the past. An example is in automotive vehicles where microprocessors and minicomputers can be used to perform fuel management functions, optimally operate emission controls, control engine idle speeds, control vehicle heating and cooling systems, and so forth.

Although these electronic devices may operate according to complex algorithms, have substantial memory capacity and are otherwise capable of processing a great deal of information quickly and without significant electric power consumption, associated electrical actuators have not been unqualified successes.

Electric actuators for vehicle components such as EGR valves, passenger compartment heater control valves, or passenger compartment temperature-controlling air stream blend doors and dampers have been inordinately expensive compared to pneumatic actuators capable of performing the same tasks. This is particularly true of vacuum pressure operated actuators which, when communicated to a source of vacuum pressure, operate controlled devices quickly and forcefully yet are inexpensive, highly reliable and have long life expectancies. While positive pressures can be used to actuate vehicle components, use of vacuum pressure is desirable because pressure hoses, valves, etc. are not subject to accummulations of condensed atmospheric moisture which can freeze and impair performance. Furthermore, vacuum pressure sources are usually available in automotive vehicles either because the vehicle intake manifold is typically maintained at vacuum pressure or the vehicle is equipped with a vacuum pump.

An object of the present invention is to provide a transducer and an actuator system including a transducer for receiving an electrical signal input and producing an actuating output pressure which varies in accordance with variations in the electrical input signal.

According to the invention, there is provided a transducer for producing an output pressure in response to an electrical input signal characterised by a housing defining an input port for communicating with a pressure source, an input port for communicating with ambient atmosphere, and an output port; regulator valving means including a regulator control member movable to control communication between said output port and said input ports to govern the pressure at said output port, said control member being acted upon in use by differential pressure force between said output port and pressure at one of said input ports; and electrical signal responsive actuator means for exerting actuating force on said control member to govern the output pressure as a function of said input signal said actuator means comprising magnetic field producing means supported by said housing adjacent said regulator valving means and a conductor electrically connected across said signal source and disposed in a path of flux produced by said magnetic field producing means, said conductor being supported in force transmitting relationship with said control member and effective to exert force on said control member which varies in relation to changes in signals from said source.

For a better understanding of the invention, and to show how the same may be carried into effect, reference will now be made, by way of example, to the accompanying drawings which illustrate a preferred embodiment of the invention in which:

Figure 1 is a schematic view of an actuator system embodying the present invention;

Figure 2 graphically depicts the relationship between an output pressure produced by a transducer of the system of Figure 1 and electrical signals input to the transducer;

Figure 3 is a fragmentary cross-sectional view of a portion of a transducer forming part of the system of Figure 1; and

Figures 4 and 5 are views similar to Figure 3 with parts illustrated in different operating positions.

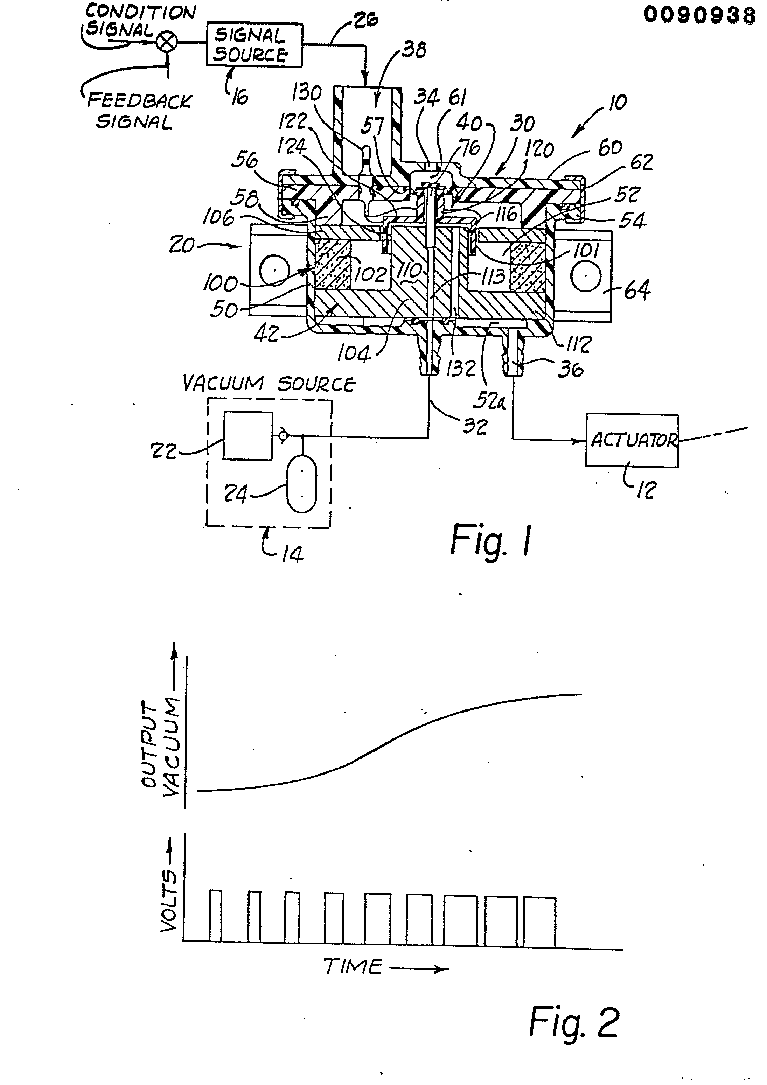

An actuator system 10 is illustrated in Figure 1 of the drawings and includes a vacuum operated actuator 12, a source 14 of operating vacuum for the actuator 12, an electrical signal source 16 and a transducer 20 for controlling operation of the actuator 12 by the vacuum source 14 in response to changes in electrical signals output from the signal source 16. The actuator system 10 is preferably constructed for use in an automotive vehicle in which the actuator moves an actuated device, such as a valve member, to a given position and maintains the member in position until further position adjustment is demanded by changes in the transducer input signal.

The actuator 12 can be of any suitable or conventional construction, such as a piston subjected to differential pressure between the applied vacuum and ambient or atmospheric pressure and a spring force for opposing motion of the piston by differential pressure and for returning the piston to a "rest" position when there is no differential pressure.

The illustrated vacuum source 14 is formed by a vacuum producing structure indicated by the reference character 22 and an accumulator 24 evacuated by the vacuum producing structure 22 to provide a "reservoir" of operating vacuum for the system 10. The vacuum producing structure 22 can be an engine driven vacuum pump or, in a spark ignition engine, the intake manifold which is normally operated at vacuum pressure. A check valve is disposed between the accumulator 24 and the structure 22 so that, in the event the pressure produced by the structure 22 should become greater than that in the accumulator 24 the check valve blocks discharging of the accumulator.

The electrical signal source 16 is schematically illustrated and can be of any suitable construction. In the preferred embodiment the source 16 includes input circuitry schematically illustrated as provided with an input signal indicative of a sensed condition, such as sensed temperature, and a position feedback signal which is supplied to the signal source input in accordance with the operation of the actuator 12. The signal source input signals are algebraically summed and processed by the signal source circuitry to produce a pulse width modulated output signal fed to the transducer 20 on a coaxial line 26.

As illustrated by FIGURE 2, the pulse width modulated output signal is formed by a series of constant voltage magnitude, constant frequency pulses. The pulses vary in duration and thus the average output signal current from the electrical signal source 16 to the transducer 20 is varied. When the output pulse widths increase, the current to the transducer increases causing the vacuum output to the actuator to increase ( SEE FIGURE 2). When the output pulse width decreases the transducer output vacuum level is reduced accordingly.

The transducer 20 thus supplies the actuator with regulated operating vacuum pressure varying as a function of the variations in the electrical signal input to it from the signal source 16. The preferred transducer 20 comprises a housing assembly 30, a vacuum regulator 40 disposed within the housing assembly 30 and an electric signal responsive actuator 42 for controlling the regulator 40. The housing assembly 30 defines input ports 32,34 communicating to the vacuum source 14 and atmospheric air, respectively, and an output port 36 communicating with the actuator 12. The housing assembly also defines an electrical connector structure 38 to which the coaxial line 26 carrying the pulse width modulated signals from the signal source is connected to the housing assembly.

As best illustrated by Figure 1, the housing assembly 30 includes a cup-like body 50 defining an interior chamber 52 including an output vacuum chamber portion 52a at the closed end of the body 50. The input port 32 and the output port 36 are both formed in the closed end of the body 50 with these ports being formed within projecting vacuum hose connectors formed integrally with the body 50. The open end of the body 50 has an annular mounting flange 54 extending about its periphery.

The mounting flange 54 confronts the outer periphery of a annular assembly plate 56 disposed across the open end of body 50 and having an inner pheripheral portion 57 supporting the regulator 40. A projecting annular land 58 extends into the housing member 50 and bears against the signal responsive actuator 42 to maintain the actuator 42 assembled in its operative position.

A cover member 60 overlies the assembly plate 56. The cover member 60 defines the atmospheric air input port 34, part of the connector structure 38 and an atmospheric pressure chamber 61 adjacent the regulator 40. The cover member 60 and the plate 56 are firmly clamped to the mounting flange 54 by an annular clamping ring 62 disposed around the outer periphery of the housing.

The transducer 20 can be mounted in any suitable location and orientation since it is connected to its associated components by flexible vacuum hoses and an electric line. A mounting bracket 64, partially illustrated, is attached to the housing assembly 30 for this purpose.

The body 50, assembly plate 56 and cover member 60 are preferably formed from molded thermoplastic material and are illustrated as such. These parts can as well be formed from any suitable non-magnetic die-cast metal.

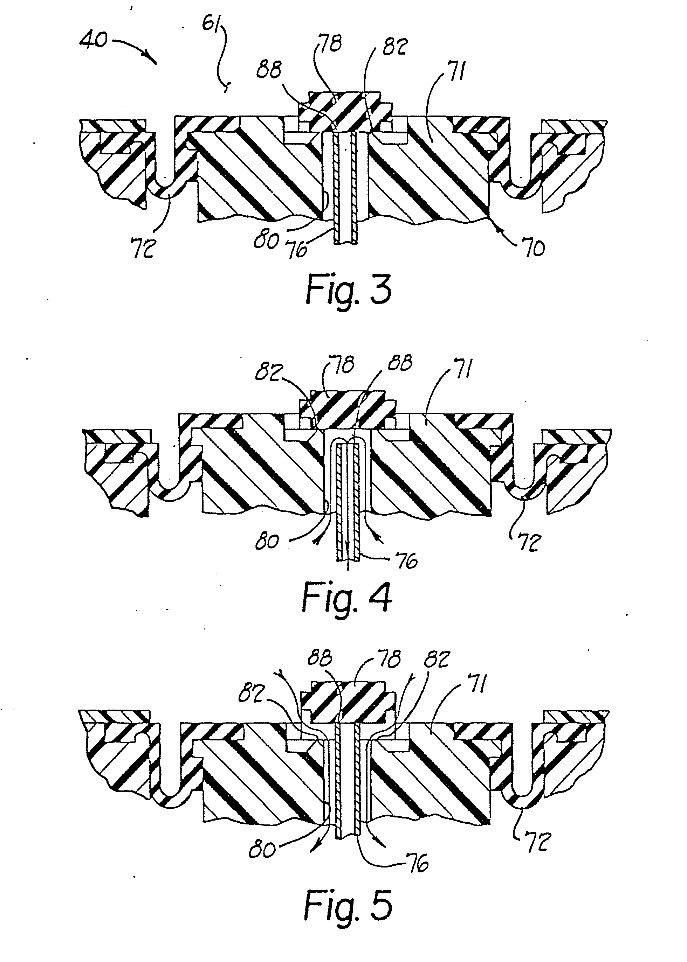

Referring to FIGURES 3-5 the preferred regulator 40 includes a control member 70 extending from the actuator 42 and which is movable to control communication between the output port and the input ports to govern the pressure level supplied to the actuator 12. The control member 70 is tubular and generally cylindrical forming a movable valve body portion 71 at its end adjacent the assembly plate 56. The regulator 40 further comprises a flexible rubber-like diaphragm 72 engaging the valve body portion 71, a fixed valve body 76, and a valving member 78 coacting with the movable valve body portion 71 and the fixed valve body 76.

The valve body portion 71 defines a central valve body passage 80 extending axially through it and communicating with the output chamber portion 52a. A valve seat 82 extends about the end of the passage 80 for engagement with the valving member 78.

The fixed valve body 76 is preferably a thin walled rigid tube disposed within the passage 80 and communicating vacuum from the input vacuum port 32 to the regulator 40. The fixed valve body tube is rigidly supported in the housing assembly 30 and sealed in place to prevent leakage between the input port and the housing assembly interior. The fixed valve body defines an annular valve seat 88 at its projecting end which is sealingly engageable with the valving member 78. The diameter of the valve body tube is smaller than the control member passage 80 to permit free flow between them.

The valving member 78 is preferably a button-like structure molded integrally with the rubber-like diaphragm 72 and urged resiliently toward sealing engagement with the seat 82 by narrow tongue-like strips of the diaphragm material (see FIGURE 1) continuous with the valving member and the diaphragm. The diameter of the member 78 is greater than that of the seat 82 so the member 78 can sealingly engage the seat 82 as well as the fixed valve body seat 88.

The output pressure chamber portion 52a is alternatively communicable with the vacuum source pressure and the atmospheric pressure chamber 61 to alter the output vacuum from the transducer 70 to the actuator 12. When the valve body portion 71 moves in a direction away from the output chamber 52a, as shown by FIGURE 4, the valving member 78 is carried by the valve body 71 so that it is and remains sealingly engaged on the seat 82 while being disengaged from the annular seat 88 formed by the end of the fixed valve body tube 76. This results in direct communication between the vacuum pressure source and the output pressure chamber 52a via the valve body 76 and the passage 80 causing the vacuum level in the chamber portion 52a to increase as it is evacuated.

When the control member valve body portion 71 moves toward the output chamber portion 52a (see FIGURE 5) the valving member 78 sealingly engages the fixed valve body seat 88 so that continued movement of the valve body portion 71 disengages the seat 82 from the valving member 78. Atmospheric air flows from the atmospheric pressure chamber 61 through the movable valve body seat 82 and into the output chamber portion 52a via the passage 80 to reduce the output vacuum level.

The position of the movable valve body portion 71 is determined by forces acting on it applied by the regulator actuator 42 and by an output pressure responsive feedback force created by differential pressure acting on the effective areas of the valve body portion 71 and the diaphragm 72 between the chamber 61 and the output chamber 52a. The tube forming the valve 76 has an extremely small cross sectional area so that the differential pressure force attributable to the source vacuum and atmospheric pressure acting across the effective area of the tube is relatively small.

The feedback force, as noted, is created by differential pressure acting on the effective area provided by the diaphragm 72 and the valve body portion 71. The diaphragm 72 is sealed about its outer perimeter to the assembly plate 56 and is sealed to the valve body portion 71 about its inner perimeter. Thus the diaphragm and valve body form a movable wall between the output and atmospheric air chamber pressures so that a feedback pressure force which varies according to transducer output pressure is exerted on the valve body 71.

The regulator actuator and feedback forces act in opposition to each other and always tend to balance with the valve body portion 71 positioned so that the valving member 78 blocks communication between the output chamber 52a and both the vacuum source and the atmospheric chamber 61 (i.e. the position illustrated by FIGURE 3).

For example, when the regulator actuator force applied to the valve body portion 71 increases (moving the valve body 71 from the position illustrated by FIGURE 3 to the position illustrated by FIGURE 4) the regulator output vacuum increases thus increasing the differential pressure feedback force so that the valve body portion 71 returns to the position illustrated by FIGURE 3 with a stable, larger output vacuum pressure established in the output chamber 52a. If the regulator actuator force is decreased (tending to shift the valve body 71 to its position illustrated by FIGURE 5) the regulator output vacuum is decreased, decreasing the differential pressure feedback force acting on the valve body 71 and resulting in the valve body 71 being again positioned as illustrated by FIGURE 3.

The differential pressure feedback force acting on the valve body 71 and the diaphragm 72 thus provides degenerative feedback in the form of a stabilizing force which changes in magnitude to oppose any unbalanced regulator actuator force on the valve body 71. The valve body 71 thus always tends to remain essentially stationary and in the position illustrated by FIGURE 3.

The electrical signal responsive regulator actuator 42 produces variable electro-magnetic forces applied to the regulator control member 70 to govern the vacuum pressure output from the transducer 20. Referring again to FIGURE 1 the actuator 42 comprises a magnetic field producing assembly 100 supported adjacent the regulator 40 which coacts with an electric signal responsive conductor 101 disposed in the magnetic field to produce electro-magnetic force applied to the regulator control member 70 which varies according to the transducer input signal.

The magnetic field producing assembly 100 comprises a permanent magnet 102 and pole pieces 104, 106 for containing and directing the magnetic flux produced by the magnet. The assembly 100 is preferably supported adjacent the regulator within the housing 30. The permanent magnet 102 is formed by a torus of magnetic material, such as Alnico 8, and defines a generally rectangular cross-sectional shape with smooth planar axial faces. The pole piece 104 defines a central cylindrical body 110 having a radially extending flange 112 supported adjacent the closed end of the housing body 50. The outer periphery of the flange 112 fits snugly against the housing wall and the magnet 102 is seated in intimate face contact with the adjacent surface of the flange 112.

The central portion of the pole piece body 110 defines a flow passage 113 through which the vacuum souce is communicated to the regulator 40 by the tubular fixed valve 76. The valve tube 106 is sealed in place in the passage 113 and the passage is aligned with the input port 32. The pole piece 104 is seated on an O-ring seal surrounding the input port 32 and the adjacent end of the passage 113 so that the vacuum source is sealed off from the remainder of the housing assembly interior.

The pole piece 106 is formed by a flat annulus supported atop the magnet 102 in intimate surface contact with the adjacent axial face of the magnet. The inner periphery of the pole piece 106 is cylindrical and extends about the outer periphery of the pole piece body 110 to define a narrow annular gap 116 through which magnetic flux is directed between the adjacent pole pieces.

The pole pieces are formed from suitabe ferrous materials and are each of a size and shape adequate to conduct all of the magnetic flux from the magnet 102 so that the magnetic field is maintained substantially wholly within the transducer 20. The pole pieces direct and channel the magnetic flux through the gap 116 where the flux is concentrated.

The regulator control member 70 includes a tubular body portion 120 projecting from the regulator valve body portion 71 toward the pole piece 74, a radial flange 122 at the end of the body portion 120 and a skirt-like electrical conductor supporting bobbin 124 extending axially from the flange 122 and disposed in the air gap 116. The electric signal conductor 101 is preferably formed by a fine insulated wire coil which is helically wound on and bonded in place to the bobbin 124. The ends of the coil 101 are connected across the electrical signal source 16 by a plug type connector 130 which is fixed to and sealed in place in the assembly plate 56 and projects through the cover 60 into a female receptacle molded into the cover member.

The output signal from the electrical signal source 16 passes through the coiled conductor 101 in the air gap 116 giving rise to a magnetic force urging the coil out of the air gap in a direction away from the magnet assembly 100. The extent of this force is determined by the current level in the coiled conductor 101. The vacuum pressure in the output chamber increases in magnitude with increases in conductor current and <u>vice versa</u>. FIGURE 2 graphically depicts average signal source output current increasing over a given time interval with the transducer output vacuum increasing accordingly.

In the preferred transducer the passage 80 through the tubular control member body portion forms an air passage about the vacuum source input tube 76 for communicating with the output chamber portion 52a via a passage 132 through the pole piece body 110. Accordingly when the signal current level is reduced, the regulator control member 70 moves to its position illustrated by Figure 5 to momentarily communicate the output chamber to atmospheric pressure in the chamber 61. Air flows to the output chamber through the passage 80 and the pole piece body passage 132. The air flow path avoids the necessity of atmospheric air flowing through the air gap 116 which might otherwise result in accumulation of dust or dirt in the gap and impede operation of the regulator.

Briefly summarised, an actuator system constructed according to a preferred embodiment of the present invention includes an electrical signal source, a pressure source, a pressure operated actuator device, and a transducer for communicating controlled operating pressure to the output device which varies as a function of an electrical input signal.

A preferred transducer comprises a housing defining an input port communicating with a pressure source, an input port communicating with ambient atmosphere and an output port. A regulator valving assembly, including a control member movable to control communication between the output port and the input ports is contained by the housing. An electric signal responsive actuator acts on the regulator control member so that the pressure at the output port varies as a function of signal variations from the signal source. The signal responsive actuator comprises a magnetic field producing structure supported by the housing adjacent the regulator and a conductor electrically connected across the signal source and disposed in
a flux path produced by the field producing assembly.
The conductor is supported in force transmitting relationship with the regulator control member to move it
and alter the output pressure.

While a single embodiment of the present invention has
been illustrated and described herein in considerable
detail the invention is not to be considered limited to
the precise construction shown. Various adaptations,
modifications and uses of the invention may occur to
those skilled in the art to which the invention relates
and the intention is to cover hereby all such adaptations, modifications and uses which fall within the scope
of the appended claims.

Claims:

1. A transducer (20) for producing an output pressure in response to an electrical input signal characterised by:

a) a housing (30) defining an input port (32) for communicating with a pressure source, an input port (34) for communicating with ambient atmosphere, and an output port (36);

b) regulator valving means (40) including a regulator control member (70) movable to control communication between said output port (36) and said input ports (32,34) to govern the pressure at said output port (36), said control member (70) being acted upon in use by differential pressure force between said output port and pressure at one of said input ports (32,34); and

c) electrical signal responsive actuator means (42) for exerting actuating force on said control member (70) to govern the output pressure as a function of said input signal said actuator means comprising magnetic field producing means (102,104,106) supported by said housing (30) adjacent said regulator valving means (40) and a conductor (101) electrically connected across said signal source and disposed in a path of flux produced by said magnetic field producing means, said conductor being supported in force transmitting relationship with said control member (70) and effective to exert force on said control member which varies in relation to changes in signals from said source.

2. A transducer as claimed in claim 1 characterised in that said magnetic field producing means comprises: a permanent magnet (102) disposed within said housing (30); and at least one pole piece (104,106) associated with said magnet for forming a flux path.

3. A transducer as claimed in claim 1 or 2 characterised in that said magnetic field producing means defines a narrow air gap (16) through which magnetic flux is directed, said conductor being supported in said air gap.

4. A transducer as claimed in any one of claims 1 to 3 characterised in that said control member (70) includes a body structure (120) projecting from said regulator valving means (40) toward said magnetic field producing means, said conductor forming a coil on and fixed to a bobbin (124) connected to said body structure.

5. A transducer as claimed in claim 4 when dependent on claim 3, characterised in that said air gap (116) is annularly shaped and said bobbin (124) comprises a generally cylindrical skirt disposed in said gap.

6. A transducer as claimed in any one of claims 1 to 5 characterised in that said control member (70) defines an internal flow passage communicating said regulator valving means with said output port.

7. A transducer as claimed in claim 6 characterised in that said magnetic field producing means comprises a flow passage (132) communicating between said control member body flow passage and said output port (36) for enabling air to flow from a bobbin passage to said output port without passing through said air gap.

8. A transducer (20) for producing a vacuum output pressure in response to an electrical input signal characterised by:

a) a housing (30) defining an interior chamber, first and second input ports (32,34) communicable, respectively, with a vacuum source (14) and atmospheric pressure, an output port (36) communicable with a vacuum pressure actuated device (12), and an electrical connector section (38);

b) regulator valving means (40) in said housing (30) comprising a control member (70) movable to communicate said first or second input port (32,34) with said output port (36) to thereby control the vacuum pressure level at said output port (36);

c) magnetic means (102,104,106) in said chamber comprising a permanent magnet (102) and at least one pole piece (104,106), said magnetic means defining an air gap across which magnetic flux is directed;

d) electrical signal responsive means (42) for applying force to said regulator control member (70) to vary the vacuum level at said output port (36) in relation to variations in said electrical input signal, said signal responsive means (42) comprising an electrical conductor electrically connected to said electrical connector section of said housing and a supporting structure (124) for supporting said conductor in said air gap, said supporting structure being in force transmitting relationship with said regulator control member (70).

9. An actuator system (10) characterised by a transducer (20) according to any one of the preceding claims, an input port (32) of the transducer being connected to a pressure source (14) and the electrical signal responsive means being connected to a signal source (16).

Fig. 1

Fig. 2

Fig. 3

Fig. 4

Fig. 5

European Patent
Office

**EUROPEAN SEARCH REPORT**

0090938
Application number

EP 83 10 1643

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 079 753 (R.C. POPP) <br> * Abstract; claim 1 * | 1 | G 05 D 16/20 |
| A | GB-A-1 551 039 (IMPERIAL CHEMICAL INDUSTRIES LTD.) <br> * Claim 1 * | 1 | |

TECHNICAL FIELDS
SEARCHED (Int. Cl. ³)

G 05 D 16/20

The present search report has been drawn up for all claims

| Place of search <br> BERLIN | Date of completion of the search <br> 23-06-1983 | Examiner <br> KOEHN G |
|---|---|---|